# EUROPÄISCHE PATENTANMELDUNG

(11) **EP 0 842 825 A1**
(43) Veröffentlichungstag der Anmeldung: **20.05.1998**
(21) Anmeldenummer: 97118878.4
(22) Anmeldetag: 30.10.1997
(51) Int. Cl.: B60R 21/20

(54) **Abdeckkappe für ein Airbag-Modul**

(30) Priorität: 15.11.1996 DE 19647253
(71) Anmelder: TRW Automotive Safety Systems GmbH, 63743 Aschaffenburg (DE)
(72) Erfinder: Kreuzer, Martin, 63839 Kleinwallstadt (DE)
(74) Vertreter: Fuchs Mehler Weiss

(57) **Zusammenfassung**

Bei einer Abdeckkappe (1) für ein im Nabenbereich (2) eines Lenkrades (3) angeordnetes Airbag-Modul (4) mit einem Basisteil (5) aus relativ festem Kunststoff, einer Auflage (6) aus relativ weichem Kunststoff und einem Überzug (7) aus Leder ist vorgesehen, daß der Überzug (7) aus Leder sich - mit Ausnahme eines zentralen Bereiches (8) für die Anbringung eines Firmenlogos - ohne Teilungsnaht über die gesamte Oberfläche der Abdeckkappe (1) erstreckt und letztere randseitig umgreift, und daß die Abdeckkappe (1) als ein einstückig aufklappendes Bauteil mit einer Sollbruchstelle (9) und einem gegenüberliegenden Gelenkbereich (10) ausgebildet ist.

## Beschreibung

Die Erfindung betrifft eine Abdeckkappe für ein im Nabenbereich eines Lenkrades angeordnetes Airbag-Modul mit einem Basisteil aus relativ festem Kunststoff, einer Auflage aus relativ weichem Kunststoff und einem Überzug aus Leder.

Bei derartigen Abdeckkappen hat man bisher eine etwa in der Mitte quer zur Fahrzeuglängsachse und an den seitlichen Rändern verlaufende Teilungsschwachstelle vorgesehen, längs derer die Abdeckkappe bei der Aktivierung des Airbags so aufreißt, daß die Abdeckkappe in zwei Teilen nach oben und nach unten aufklappen kann. Man hat also für die Ausführungsform mit Lederüberzug dieselbe Abdeckkappenkonzeption benutzt, wie bei solchen ohne Lederüberzug. Daraus ergab sich die Notwendigkeit, den Lederüberzug so zu gestalten, daß er ebenfalls an der in der Abdeckkappe vorgesehenen Teilungsschwachstelle aufreißt. Mit anderen Worten, man mußte dafür sorgen, daß das Aufreißen durch den Lederüberzug nicht behindert wird.

Während man aber in den aus Kunststoff hergestellten Abdeckkappen ohne weiteres Teilungsschwachstellen realisieren kann, die im Ernstfall zuverlässig aufreißen, bei normalem Gebrauch aber unbeschädigt bleiben, gelingt dies bei dem Naturprodukt Leder nur höchst unvollkommen. Einerseits muß die Schwachstelle im Kunststoffteil der Abdeckkappe um den Aufreißwiderstand des Leders schwächer ausgebildet werden und andererseits muß das Leder die Gebrauchsfestigkeit der Abdeckkappe im Umfang der zusätzlichen Schwächung im Kunststoffteil verbessern. Es leuchtet ein, daß diese gegenläufigen Anforderungen mit einer Schwächung des Lederäberzuges längs der Teilungsschwachstelle in dem Kunststoffteil der Abdeckkappe nur unvollkommen erfüllt werden können, zumal das Leder selbst bei gleicher Materialdicke sehr unterschiedliche Festigkeitswerte haben kann, die sich darüber hinaus durch Alterung und in Abhängigkeit von der Luftfeuchtigkeit noch erheblich verändern können. Ist das Leder zu fest, wird das Aufreißen der Abdeckkappe unkontrollierbar behindert, ist es zu schwach, bricht es schon bei normalem Gebrauch längs der Schwachstellen.

Es besteht somit die Aufgabe, eine Abdeckkappe der eingangs genannten Art so weiterzubilden, daß ihr Aufreiß- und Gebrauchsverhalten vom Naturprodukt Leder weitgehend unabhängig ist. Es soll also eine lederbezogene Abdeckkappe geschaffen werden, bei der das Leder die Funktionen der Abdeckkappe nicht beeinträchtigt.

Diese Aufgabe wird erfindungsgemäß dadurch gelöst, daß der Überzug aus Leder sich - mit Ausnahme eines zentralen Bereiches für die Aufnahme eines Firmenlogos - ohne Teilungsnaht über die gesamte Oberfläche der Abdeckkappe erstreckt und letztere randseitig umgreift und daß die Abdeckkappe als ein einstückig aufklappendes Bauteil mit einer Sollbruchstelle und einem gegenüberliegenden Gelenkbereich ausgebildet ist.

Der Erfindung liegt die Erwägung zugrunde, daß es bei modernen Fahrzeugen nicht unbedingt erforderlich ist, daß die Abdeckkappe für das im Nabenbereich eines Lenkrades untergebrachte Airbag-Modul zweiteilig aufklappt, und daß eine einteilig nach oben in Richtung Windschutzscheibe aufklappende Abdeckkappe keineswegs die bis dahin angenommenen Gefahrenmomente beinhaltet. Zum einen können die Airbag-Module inzwischen platzsparender untergebracht werden und erfordern daher nicht mehr so große Abdeckkappen und zum anderen ist der Abstand vom Anlenkpunkt bis zur Windschutzscheibe im allgemeinen so groß, daß eine Zerstörung der Windschutzscheibe durch die aufklappende Abdeckkappe nicht befürchtet werden muß. Außerdem besteht die Möglichkeit, die Abdeckkappe so zu gestalten, daß sie zumindest im einseitig abgerissenen Zustand verhältnismäßig weich und nachgiebig ist.

Damit ist es möglich geworden, die Abdeckkappe insgesamt mit Leder zu überziehen und die Teilungsschwachstellen bzw. Sollbruchstellen so anzuordnen, daß im Material Leder selbst keine Maßnahmen für ein gezieltes Aufreißen mehr getroffen werden müssen. Die angestrebte Entkopplung zwischen den Notwendigkeiten des Aufreißens und den Materialeigenschaften des Naturproduktes Leder ist somit erreicht.

Vorteilhafte Ausgestaltungen des Erfindungsgedankens sind in den Unteransprüchen 2 bis 6 beschrieben. Weitere Einzelheiten werden anhand des in den Figuren 1 bis 3 dargestellten Ausführungsbeispiels näher erläutert.
Fig. 1 zeigt einen Schnitt durch ein Lenkrad
Fig. 2 zeigt vergrößert eine erste Befestigungsvariante
Fig. 3 zeigt vergrößert eine zweite Befestigungsvariante

Das im Schnitt dargestellte Lenkrad 3 hat einen Nabenbereich 2 und eine Abdeckkappe 1 für das zentral angeordnete Airbag-Modul 4. Die Abdeckkappe 1 besteht aus einem Basisteil 5 aus relativ festem Kunststoff, einer Auflage 6 aus relativ weichem Kunststoff und einem Überzug 7 aus Leder. Der Überzug 7 aus Leder erstreckt sich - ggf. mit Ausnahme eines zentralen Bereiches 8 für die Anbringung eines Firmenlogos - über die gesamte Oberfläche der Abdeckkappe 1. Er weist aus ästhetischen Gründen keinerlei Teilungsnaht auf und umgreift randseitig das Basisteil 5 bzw. die auf dem Basisteil 5 befindliche Auflage 6. Die Abdeckkappe 1 ist als einstückig aufklappbares Bauteil mit einer Sollbruchstelle 9 und einem gegenüberliegenden Gelenkbereich ausgebildet.

Durch die erfindungsgemäße Ausgestaltung der Abdeckkappe 1 ist es möglich, die Sollbruchstelle 9 so anzuordnen, daß der Überzug 7 aus Leder bei einer Aktivierung des Airbags unbeschädigt bleiben kann, d.h., das Naturprodukt Leder ist in dem kritischen Bereich der Sollbruchstelle 9 unbeteiligt, so daß die gegenläufigen Anforderungen hinsichtlich Haltbarkeit unter allen normalen Beanspruchungen während der Lebensdauer eines Fahrzeugs und einwandfreiem Aufreißen beim plötzlichen Entfalten des Airbags mit sehr engen Toleranzen erfüllt werden können.

Das Basisteil 5 ist im dargestellten Ausführungsbeispiel mit nach innen weisenden Stegen 11 und 12 ausgestattet die zur Befestigung der Abdeckkappe am Airbag-Modul 4 dienen. Dabei ist die Sollbruchstelle 9 in dem einen Steg 11 und der Gelenkbereich 10 am gegenüberliegenden Steg 12 ausgebildet. Die Sollbruchstelle 9 ist als Materialschwächung des Steges 11 oberhalb der Befestigung 13 ausgebildet, während der Gelenkbereich 10 als Materialschwächung oberhalb der Befestigung 14 ausgebildet ist. Im Aktivierungsfalle reißt der Steg 11 längs der Sollbruchstelle 9 auf, und die Abdeckkappe 1 klappt als Ganzes um den Gelenkbereich 10 im Steg 12 nach oben auf. Statt durch eine Materialschwächung kann der Gelenkbereich 10 selbstverständlich durch Auswahl eines ausreichend biegefähigen Kunststoffmaterials realisiert werden.

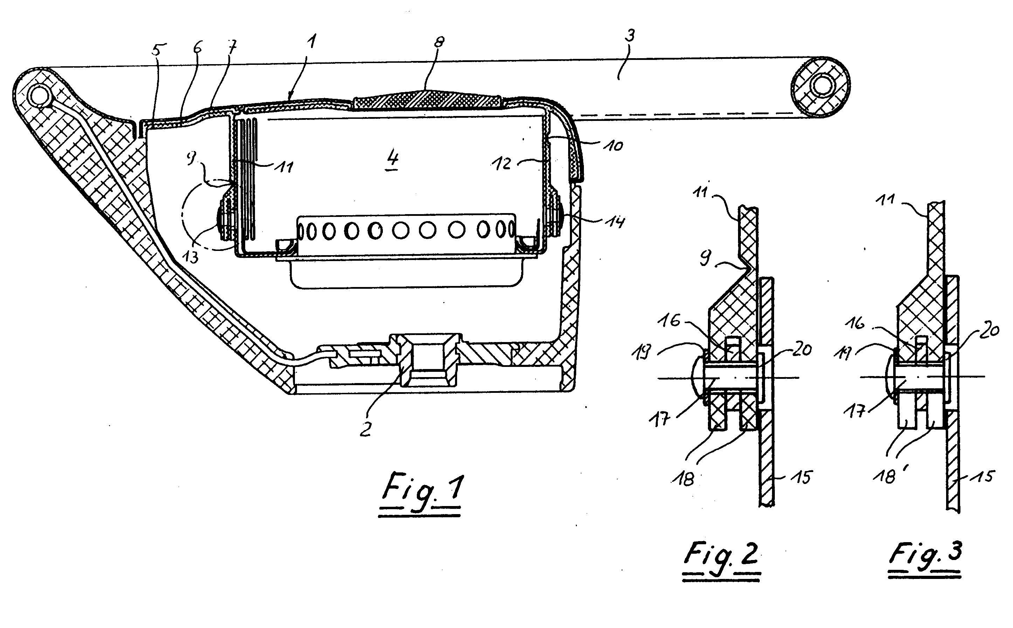

Fig. 2 zeigt vergrößert eine erste Variante der Befestigung der Abdeckkappe 1 am Airbag-Modul 4. Letzteres besitzt eine Gehäusewand 15 aus Blech, in der durch Ausstanzen und Auswölben eine einstückig mit der Gehäusewand zusammenhängende Lasche 16 ausgebildet ist. Der Untere Rand des Steges 11 ist als Materialdopplung 18 ausgeführt, so daß dieser Rand auf die Lasche 16 aufgesteckt und mittels Niet 17 und Scheibe 19 mit der Lasche 16 verbunden werden kann. Oberhalb der Befestigungsstelle ist im Steg 11 die Sollbruchstelle 9 vorgesehen. Da die Lasche 16 nach außen vorgewölbt ist, kann der Nietkopf 20 im Ausstanzungsbereich der Lasche 16 untergebracht werden, ohne daß er ins Innere des Gehäuses vorsteht.

Bei der Ausführungsform gemäß Fig. 3 ist keine Sollbruchstelle vorgesehen. Statt dessen ist die Materialdopplung 18' mit nach unten offenen Schlitzen ausgestattet. Auf diese Weise kann mittels Niet 17 und Scheibe 19 eine Klemmverbindung realisiert werden, die so ausgelegt ist, daß die Materialdopplung 18' bei einer Aktivierung des Airbags aus der Klemmverbindung mit der Lasche 16 nach oben herausrutschen kann.

Beide Befestigungsarten haben sich in Versuchen als absolut funktionssicher erwiesen.

## Patentansprüche

1. Abdeckkappe (1) für ein im Nabenbereich (2) eines Lenkrades (3) angeordnetes Airbag-Modul (4) mit einem Basisteil (5) aus relativ festem Kunststoff, einer Auflage (6) aus relativ weichem Kunststoff und einem Überzug (7) aus Leder, **dadurch gekennzeichnet,** daß das Basisteil (5) mit zwei nach innen weisenden Stegen (11, 12) ausgestattet ist, die der Befestigung der Abdeckkappe (1) am Airbag-Modul (4) dienen, daß einer der Stege (11) eine Sollbruchstelle (9) und der gegenüberliegende Steg (12) einen Gelenkbereich aufweist, daß die Abdeckkappe (1) als ein einstückig aufklappendes Bauteil ausgebildet ist und daß der Überzug (7) aus Leder sich ohne Teilungsnaht über die gesamte Oberfläche der Abdeckkappe (1) erstreckt und Letztere randseitig umgreift.

2. Abdeckkappe nach Anspruch 1, **dadurch gekennzeichnet,** daß im zentralen Bereich (8) des Überzugs (7) aus Leder eine Ausnehmung für die Anbringung eines Firmenlogos angeordnet ist.

3. Abdeckkappe nach Anspruch 2, dadurch gekennzeichnet, daß die Sollbruchstelle (9) als Materialschwächung oberhalb der Befestigung (13) des einen Steges (11) am Airbag-Modul (4) ausgebildet ist.

4. Abdeckkappe nach Anspruch 2, dadurch gekennzeichnet, daß der Gelenkbereich (10) als Materialschwächung oberhalb der Befestigung (14) des anderen Steges (12) am Airbag-Modul (4) ausgebildet ist.

5. Abdeckkappe nach Anspruch 2, dadurch gekennzeichnet, daß für den Gelenkbereich (9) ein biegefähiges Kunststoffmaterial vorgesehen ist.

6. Abdeckkappe nach Anspruch 1, dadurch gekennzeichnet, daß an einem Steg (11') statt einer Sollbruchstelle (9) eine Klemmbefestigung (19) zwischen dem einen Steg (11') und dem Airbag-Modul (4) vorgesehen ist.
